Europäisches Patentamt

European Patent Office

Office européen des brevets

(19)

(11) Veröffentlichungsnummer: **0 051 169
B1**

(12)

# EUROPÄISCHE PATENTSCHRIFT

(45) Veröffentlichungstag der Patentschrift:
**02.01.85**

(21) Anmeldenummer: **81108192.6**

(22) Anmeldetag: **12.10.81**

(51) Int. Cl.³: **C 08 F 220/18, C 09 J 3/14 //
(C08F220/18, 220/44, 220/04,
222/00)**

(54) Verfahren zur Herstellung von Polyacrylsäureester-Dispersionen und Ihre Verwendung.

(30) Priorität: **24.10.80 DE 3040086**

(43) Veröffentlichungstag der Anmeldung:
**12.05.82 Patentblatt 82/19**

(45) Bekanntmachung des Hinweises auf die Patenterteilung:
**02.01.85 Patentblatt 85/1**

(84) Benannte Vertragsstaaten:
**BE DE FR GB IT NL**

(56) Entgegenhaltungen:
**GB - A - 586 796
GB - A - 1 259 459**

**Die Akte enthält technische Angaben, die nach dem
Eingang der Anmeldung eingereicht wurden und die
nicht in dieser Patentschrift enthalten sind.**

(73) Patentinhaber: **BAYER AG, Konzernverwaltung RP
Patentabteilung, D-5090 Leverkusen 1 Bayerwerk (DE)**

(72) Erfinder: **Nolte, Wilfried, Dr., Gronenborn C33,
D-5090 Leverkusen (DE)**
Erfinder: **Hombach, Rudolf, Dr.,
Johann-Janssen-Strasse 24, D-5090 Leverkusen (DE)**
Erfinder: **Keller, Wilfried, Dr., Moltkestrasse 9,
D-4047 Dormagen (DE)**

## Beschreibung

Die vorliegende Erfindung betrifft die Herstellung und Verwendung von Polyacrylsäureester-Dispersionen, die insbesondere zur Konfektionierung von Haftklebemassen, wie Einseit-Fußboden-Klebstoffen, geeignet sind.

Bekannte Haftkleber dieser Art enthalten Copolymerisate von Acrylsäureestern mit kleinen Anteilen an Acrylnitril und Acrylsäure. Die Nitril- und Carboxylgruppen liefern die Adhäsionseigenschaften des Klebstoffs an die Substrate. Zur Erzielung von ausreichenden Kohäsionseigenschaften, d. h. ausreichende Festigkeit des Klebstoffilms, werden interne oder externe Vernetzer eingearbeitet. Bei externen Vernetzern kann es sich z. B. um reaktive Harze handeln (DE-AS 1 594 147). Aus der DE-PS 1 297 270 ist bekannt, als interne Vernetzer reaktive Gruppen enthaltende Monomere einzupolymerisieren, z. B. solche mit Methylol-, N-Methylol-ether-, Halogenhydrin- oder Epoxidgruppen. Es wird empfohlen, als Reaktionsbeschleuniger eine Base oder eine Säure zuzusetzen.

Gemäß GB-PS 1 259 459 wird eine Dispersion mit einem Copolymer aus z. B. Acrylsäurebutylester, Acrylnitril und Acrylsäure durch polyvalente Metallsalze, wie Zinkacetat, vernetzt, um höhere Kohäsionsfestigkeiten zu erreichen.

Es wurde auch vorgeschlagen, Monochloressigsäure-vinylester als Reaktivkomponente in das Copolymerisat einzupolymerisieren (DE-OS 2 223 630). Die Vernetzung erfolgt durch Alkali-Zusatz. Nach der DE-OS 2 639 970 wird mit einer Kombination aus 2-($\alpha$-Chloracetoxy)-alkyl-(meth)acrylat als internem Vernetzer und einem Polyaminoamid als externem Vernetzer gearbeitet.

In der DE-OS 2 352 353 werden tert.-Alkylacrylamide als festigkeitserhöhende Komponente genannt. In DE-OS 2 355 364 sind Polymerdispersionen mit einem Zusatz an Cu- und Zn- oder Zr-Ionen beschrieben. Der Metallzusatz soll dem Klebstoff höhere Festigkeit und Weichmacherbeständigkeit verleihen. In US-PS 3 492 260 werden Acrylester-Copolymere mit Derivaten von N-Alkylmaleinsäurehalbamiden als interne, wärme-aktivierbare Vernetzer beansprucht.

Alle diese vorgeschlagenen Dispersionen werden unter Verwendung von 3—5 Gew.-% (bezogen auf Gesamtmonomermenge) Emulgator hergestellt.

Die vorgeschlagenen Dispersionen weisen Nachteile auf. Die Verwendung eines Vernetzers bedeutet sowohl eine zusätzliche Erhöhung der Produktionskosten als auch einen zusätzlichen Verarbeitungschritt zur Vernetzung bei der Konfektionierung der Haftklebemasse. Die Vernetzung kann z. B. durch Zugabe von Alkali und anschließender Reifezeit oder Einwirkung von Wärme erfolgen. Der verhältnismäßig hohe Emulgatorgehalt der Dispersionen kann durch Migration des Emulgators in die Grenzfläche der Klebung die Festigkeit derselben vermindern.

Durch die vorliegende Erfindung ist es überraschend gelungen, ohne internen oder externen Vernetzer eine Polyacrylsäureester-Dispersion mit hervorragendem Eigenschaftsbild durch die bsondere Art und Menge des Initiators sowie des Emulgators bei der Polymerisation herzustellen und damit die vorerwähnten Nachteile zu vermeiden.

Gegenstand der Erfindung ist somit ein Verfahren zur Herstellung von Polyacrylsäureester-Dispersionen für Haftklebemassen durch Copolymerisation von

| | |
|---|---|
| 70 bis 92 Gew.-% | Acrylsäure-$C_4$—$C_8$-alkylester |
| 5 bis 15 Gew.-% | (Meth)Acrylnitril |
| 1 bis 5 Gew.-% | ungesättigter Mono- oder Dicarbonsäuren mmit 3—6 C-Atomen oder entsprechender Dicarbonsäure-mono-$C_1$—$C_{20}$-alkylester und |
| 0 bis 20 Gew.-% | anderer copolymerisierbarer Verbindungen |

in wäßriger Emulsion in Gegenwart eines »Redox« Initiatorsystems und eines Emulgators, dadurch gekennzeichnet, daß man

| | |
|---|---|
| 0,1 bis 1,5 Gew.-% | anionischen Emulgator, |
| 0,1 bis 1,0 Gew.-% | Alkalidisulfit, Alkalihydrogensulfit oder Schwefeldioxid und |
| 0,75 bis 2,0 Gew.-% | Ammonium- oder Alkaliperoxodisulfat |

einsetzt, wobei sich alle Prozentangaben auf Gesamtmonomermenge beziehen.

Geeignete Acrylsäurealkylester sind z. B. n-Butylacrylat, n-Hexylacrylat, n-Octylacrylat und 2-Ethylhexylacrylat. Geeignete ungesättigte Mono- und Dicarbonsäuren sowie Dicarbonsäure-monoalkylester sind z. B. Acryl-. Methacryl-. Malein-, Fumar-, Citracon- und Itaconsäure, Maleinsäuremono-n-dodecylester und Fumarsäure-mono-n-butylester.

Als andere copolymerisierbare Verbindungen kommen beispielsweise Vinylaromaten, wie Styrol, (Meth)Acrylsäureester, wie Methylmethacrylat oder Methylacrylat, Vinylalkylether mit 1 bis 4 Kohlenstoffatomen in der Alkylgruppe, Monoester aus Glykolen mit 2 bis 4 Kohlenstoffatomen, und (Meth)Acrylsäure sowie Vinylester von Carbonsäuren mit 1—18 Kohlenstoffatomen, wie Vinylacetat oder Vinylstearat, in Betracht.

Besonders bevorzugte Monomere sind 2-Ethylhexylacrylat, Buylacrylat, Acrylnitril, Acrylsäure, Methacrylsäure und Itaconsäure.

Bevorzugt wird ein Monomergemisch aus

80 bis 92 Gew.-% 2-Ethylhexylacrylat
5 bis 15 Gew.-% Acrylnitril
1 bis 5 Gew.-% Acrylsäure

polymerisiert.

Zur Einstellung des Molekulargewichts können Kettenübertragungsmittel, wie Alkylmercaptane eingesetzt werden.

Als anionische Emulgatoren werden z. B. Fettalkoholsulfate, höhere Alkylsulfonate, Alkylarylsulfonate, höhere Hydroxyalkylsulfonate, Salze der Sulfobernsteinsäureester und sulfatierte Ethylenoxidaddukte eingesetzt.

Als Initiatoren werden Alkali- oder Ammoniumsalze der Peroxodischwefelsäure in Kombination mit einem oder mehreren Reduktionsmitteln mit vierwertigem Schwefel, und zwar Schwefeldioxid, Alkalihydrogensulfit oder Alkalidisulfit, verwendet. Besonders bevorzugt werden Natrium- oder Ammoniumperoxodisulfat einerseits sowie Natrium-hydrogensulfit oder -disulfit andererseits eingesetzt.

Neben den genannten Komponenten können für die Emulsionspolymerisation der erfindungsgemäßen Dispersionen weitere Hilfs- und Modifizierungsmittel, wie Salze, z. B. Natriumsulfat, Phosphate, wie Tetranatriumdiphosphat, oder Komplexierungsmittel, wie Ethylendiamintetraessigsäure, sowie Alkalien, wie Natriumhydroxid, verwendet werden. Die Emulsionspolymerisation wird im übrigen in an sich bekannter Weise durchgeführt und kann chargenweise oder kontinuierlich erfolgen.

Es ist vorteilhaft, die Polymerisation mit einem Teil der Monomeren zu beginnen und den Rest der Monomeren im Maße des Fortschreitens der Polymerisation zusammen mit wäßriger Emulgator- und Initiatorlösung zuzugeben.

Der Luftsauerstoff im Reaktor wird vor Beginn der Reaktion durch ein Inertgas, wie Stickstoff verdrängt. Die Emulsion wird zur Aufrechterhaltung des dispersen Zustandes gerührt. Die Polymerisationstemperatur kann im Bereich von 50 bis 100°C gewählt werden. Die Reaktion führt man vorzugsweise bis zu einem Umsatz von 100%.

Nach Erreichen des gewünschten Endumsatzes wird die Reaktion mit einem üblichen Radikalfänger abgestoppt oder man läßt den Latex abkühlen. Die Dispersion wird filtriert und gegebenenfalls durch ein übliches Entmonomerisierungsverfahren wie Strippen mit Wasserdampf von nicht umgesetzten Monomeren befreit. Zur endgültigen Einstellung kann der pH-Wert der Dispersion durch Zusatz von Säure oder Alkali korrigiert und die Dispersion mit einem Alterungsschutzmittel versehen werden.

Die erfindungsgemäß hergestellten Polymerisate können in Form von 20 bis 65gew.-%igen wäßrigen Dispersionen in üblicher Weise auf die klebrig zu machende Unterlage aufgebracht werden. Die für den Auftrag geeignete Viskosität läßt sich durch Zugabe geeigneter Verdickungsmittel erreichen.

Dabei können die üblichen Zusatzstoffe für druckempfindliche Klebstoffe mitverwendet werden, z. B. Harze, wie Polyterpenharze, Terpen-Phenolharze, Weichmacher, wie Adipin- und Phthalsäureester, Füllstoffe, wie Calciumcarbonat, Bariumsulfat, Silikate und Pigmente.

Um die Alterung oder Oxidationsbeständigkeit der Klebstoffe zu verbessern, können Antioxidationsmittel, wie etwa Amine oder substituierte Phenole, mitverwendet werden.

Die erfindungsgemäßen Dispersionen können auch in Abmischung mit anderen Polymer-Dispersionen eingesetzt werden. Als Polymere kommen z. B. Polymerisate aus Chloropren, Butadien, Acrylnitril, Styrol oder Vinylacetat in Frage.

Der Auftrag des Klebstoffes kann auf beliebige Substrate erfolgen. Als Substrate seien beispielsweise Papier, Folien aus Polyethylen, PVC, Polystyrol oder Polyester, Metallfolien, Schaumstoff-Folien aus Kautschuk, Polyurethan, PVC oder Polystyrol, Textilgewebe und Faservliese aus natürlichen und synthetischen Fasern genannt.

Besonders geeignet sind die erfindungsgemäßen Klebemassen zum Kleben von diffusionsdichten Fußböden und Wandmaterialien, da nach dem Trocknen eine stark klebrige Oberfläche erhalten wird. Hierdurch wird nach dem Zusammenfügen der Flächen eine Anfangsfestigkeit erhalten, die der unmittelbaren Beanspruchung widersteht.

Es können auch Artikel hergestellt werden, die eine Klebstoffschicht auf beiden Seiten der Substrate tragen. Der Klebstoff wird üblicherweise mit einem Rakel auf das Substrat aufgebracht.

Es wurde auch gefunden, daß die erfindungsgemäßen Dispersionen eine gute Verbindung mit zahlreichen Werkstoffen, wie Holz, Papier, Kunststoffen, wie PVC und Phenolformaldehydharzen, Keramikplatten, Silikaten, wie Glas und Metallen, eingehen.

Die erfindungsgemäß hergestellten Polyacrylester-Dispersionen können also als Haftklebstoff-Rohstoff bei der Herstellung von Haftklebstoffmassen für die Ausrüstung selbstklebender Artikel, wie Klebebändern, Selbstklebeetiketten, Selbstklebefolien und Pflastern, eingesetzt werden.

In den folgenden Beispielen bedeuten die Prozentangaben Gew.-%.

## Beispiel 1

In ein Reaktionsgefäß, das mit Rührer, Rückflußkühler, Tropftrichter sowie Stickstoffein- und -auslaß ausgerüstet ist, werden

45,0 g   Wasser (demineralisiert)
0,2 g   Natrium-laurylsulfat
0,5 g   Natriumdisulfit

und je 10% der nachstehend beschriebenen Monomermischung und Initiator-Lösung vorgelegt. Die Monomermischung besteht aus

87,0 g   2-Ethylhexyl-acrylat
10,0 g   Acrylnitril
3,0 g   Acrylsäure.

Die Initiator-Lösung besteht aus

30,0 g   Wasser
1,2 g   Ammoniumperoxodisulfat.

Der Reaktorinhalt wird unter Rühren für 30 Minuten auf 75°C gebracht. Anschließend werden die restliche Monomermischung und die restliche Initiator-Lösung gleichmäßig über einen Zeitraum von vier Stunden zudosiert. Die Temperatur wird auf 80°C erhöht und aufrechterhalten, bis ein Umsatz von 100% (Restgehalt an Acrylnitril kleiner als 50 ppm) erreicht ist. Die Dispersion wird nach dem Abkühlen filtriert und mit 20%iger NaOH auf einen pH-Wert 7,0 bis 7,5 gestellt. Der Feststoffgehalt beträgt 56%.

## Beispiel 2

Nach der Vorschrift von Beispiel 1 werden die folgenden Mengen eingesetzt, wobei der Zulauf der Emulgatorlösung zusätzlich ist.

Reaktor-Vorlage:

45,0 g   Wasser
0,2 g   Natriumlaurylsulfat
0,5 g   Natriumdisulfit

Monomermischung:

77,0 g   2-Ethylhexyl-acrylat
10,0 g   Acrylnitril
10,0 g   Vinylacetat
3,0 g   Acrylsäure

Initiator-Lösung:

17,0 g   Wasser
1,0 g   Kaliumperoxodisulfat

Emulgator-Lösung:

8,0 g   Wasser
0,5 g   Natriumlaurylsulfat

Man erhält eine Dispersion mit einem Feststoffgehalt von 55%.

## Beispiel 3

Nach der Vorschrift von Beispiel 1 werden die folgenden Mengen eingesetzt:

Reaktor-Vorlage:

20,0 g   Wasser
0,2 g    Natriumlaurylsulfat
0,5 g    Natriumdisulfit
0,5 g    Acrylsäure

Monomermischung:

87,0 g   2-Ethylhexylacrylat
10,0 g   Acrylnitril
2,5 g    Acrylsäure

Initiator-Emulgator-Lösung:

45,0 g   Wasser
0,2 g    Natriumlaurylsulfat
1,5 g    Ammoniumperoxodisulfat

Man erhält eine Dispersion mit einem Feststoffgehalt von 60%.

Die Prüfung der Dispersionen erfolgt wie nachstehend beschrieben:

Die Klebmassen werden mit einer Rakel in einer Schicht von 1000 µm auf eine Polyethylenterephthalat-Folie aufgebracht. Zum Trocknen werden die beschichteten Folien staubfrei bis zur Prüfung gelagert. Nach dem Trocknen ist die Schicht 500 µm dick.

## Prüfung der Klebrigkeit

Die Klebrigkeit wird manuell durch Berühren der Klebschicht mit dem Finger ermittelt und nach einer Skala von 1 (sehr klebrig) bis 5 (nicht ausreichend klebrig) bewertet.

## Prüfung der Filmfestigkeit

Die Filmfestigkeit wird ebenfalls manuell geprüft und nach einer Skala von 1 (sehr gute Festigkeit) bis 5 (nicht ausreichende Festigkeit) bewertet.

## Prüfung der Zugscherfestigkeit

Die Prüfung der Zugscherfestigkeit erfolgt nach DIN 53 277. Der PVC-Testbelag sowie die unbeschichtete Seite der Eternit-Glasal-Platte werden mit Benzin abgewaschen. Der Klebstoff wird in einer Stärke von 200 g/m² auf die Eternit-Glasal-Platte aufgetragen. Nach einer Ablüftzeit von 30 Minuten wird der PVC-Belag-Streifen mit der Rückseite überlappt verklebt und 10 Sekunden mit einem Druck von 30 N/cm² angepreßt. Die Prüfung erfolgt a) nach 48 Stunden Lagerung bei Normalklima und b) nach 48 Stunden Lagerung bei Normalklima plus 4 Stunden Lagerung bei 60°C. Die Proben werden ohne vorherige Abkühlung geprüft.

## Prüfung der Wärmestandfestigkeit

Die zu trennenden Prüfkörper werden 7 Tage bei Normalklima gelagert. Anschließend wird die Zeit ermittelt, während der die Klebung bei einer Temperatur von 50°C der in der nachstehenden Tabelle genannten Last widersteht. Übersteht die Klebung 180 Minuten, so wird der Versuch abgebrochen. Es wird eine Doppelbestimmung durchgeführt.

Die Eigenschaften der Dispersionen nach den genannten Beispielen sind der folgenden Tabelle zu entnehmen.

0 051 169

Tabelle: Eigenschaften der Dispersionen

| | | Beispiel | | |
| --- | --- | --- | --- | --- |
| | | 1 | 2 | 3 |
| **Dispersion** | | | | |
| pH-Wert | | 7,3 | 7,0 | 7,2 |
| Konzentration (%) | | 56 | 55 | 60 |
| Viskosität (P) (n. Brookfield) | | 13,2 | 36 | 36 |
| **Film** | | | | |
| Aussehen | | trans. | trans. | trans. |
| Klebrigkeit nach | 1 Tag | 2 | 3 | 3—4 |
| | 2 Tagen | 2 | 2—3 | 3—4 |
| | 3 Tagen | 2—3 | 3 | 3—4 |
| Festigkeit | | 3—4 | 2—3 | 3—4 |
| **Klebung** | | | | |
| Zugscherfestigkeit | 23° C N/mm² | 0,46 | 0,43 | 0,45 |
| | 60° C | 0,25 | 0,17 | 0,12 |
| Wärmestandversuch (Min. bei 50°) | 50 g | 180/180 | 180/180 | 180/180 |
| | 100 g | 180/180 | 180/180 | 180/180 |
| | 150 g | 148/169 | 180/180 | 180/180 |

**Patentansprüche**

1. Verfahren zur Herstellung von Polyacrylsäureester-Dispersionen durch Copolymerisation von

| | |
| --- | --- |
| 70 bis 92 Gew.-% | Acrylsäure-$C_4$—$C_8$-alkylester, |
| 5 bis 15 Gew.-% | (Meth)Acrylnitril, |
| 1 bis 5 Gew.-% | ungesättigter Mono- oder Dicarbonsäuren mit 3 bis 6 C-Atomen oder entsprechender Dicarbonsäuremono-$C_1$—$C_{20}$-alkylester und |
| 0 bis 20 Gew.-% | anderen copolymerisierbaren Verbindungen |

in wäßriger Emulsion in Gegenwart eines »Redox« Initiatorsystems und eines Emulgators, dadurch gekennzeichnet, daß man

| | |
| --- | --- |
| 0,1 bis 1,5 Gew.-% | anionischen Emulgator, |
| 0,1 bis 1,0 Gew.-% | Alkalidisulfit, Alkalihydrogensulfit oder Schwefeldioxid und |
| 0,75 bis 2,0 Gew.-% | Ammonium- oder Alkaliperoxodisulfat |

einsetzt, wobei sich alle Prozentangaben auf Gesamtmonomermenge beziehen.

2. Verfahren nach Anspruch 1, dadurch gekennzeichnet, daß man

| | |
|---|---|
| 80 bis 92 Gew.-% | 2-Ethylhexylacrylat |
| 5 bis 15 Gew.-% | Acrylnitril und |
| 1 bis 5 Gew.-% | Acrylsäure |

copolymerisiert.

3. Verwendung bei Polyacrylsäure-Dispersionen gemäß Anspruch 1 zur Herstellung von Haftklebemassen.

4. Haftklebemassen auf Basis einer 20 bis 65gew.-%igen wäßrigen Polyacrylsäureester-Dispersion, hergestellt gemäß Anspruch 1.

## Claims

1. A process for the production of polyacrylic acid ester dispersions by copolymerising

| | |
|---|---|
| 70 to 92% | by weight of acrylic acid $C_4-C_8$-alkyl ester, |
| 5 to 15% | by weight of (meth)acrylonitrile, |
| 1 to 5% | by weight of unsaturated mono- or dicarboxylic acids having 3 to 6 carbon atoms or of the corresponding dicarboxylic acid mono-$C_1-C_{20}$-alkyl esters, and |
| 0 to 20% | by weight of other copolymerisable compounds, |

in an aqueous emulsion in the presence of a »redox« initiator system and an emulsifier, characterised in that

| | |
|---|---|
| 0.1 to 1.5% | by weight of anionic emulsifier, |
| 0.1 to 1.0% | by weight of alkali metal disulphite, alkali metal hydrogen sulphite or sulphur dioxide, and |
| 0.75 to 2.0% | by weight of peroxodisulphate, ammonium or alkali metal salt, |

are used, all the percentages being based on the total quantity of monomer.

2. A process according to Claim 1, characterised in that

| | |
|---|---|
| 80 to 92% | by weight of 2-ethylhexyl acrylate, |
| 5 to 15% | by weight of acrylonitrile, and |
| 1 to 5% | by weight of acrylic acid |

are copolymerised.

3. The use of the polyacrylic acid dispersions according to Claim 1 for the production of pressure-sensitive adhesive compositions.

4. Pressure sensitive adhesive compositions based on a 20 to 65% by weight aqueous polyacrylic acid ester dispersion, produced according to Claim 1.

## Revendications

1. Procédé de préparation de dispersions d'esters polyacryliques par copolymérisation de

| | |
|---|---|
| 70 à 92% | en poids d'acrylates d'alkyle en $C_4-C_8$, |
| 5 à 15% | en poids de (méth)acrylonitrile, |
| 1 à 5% | en poids d'acides mono- ou di-carboxyliques insaturés en $C_3-C_6$ et esters monoalkyliques en $C_1-C_{20}$ des acides dicarboxyliques correspondants, |
| 0 à 20% | en poids d'autres composés copolymérisables, |

en émulsion aqueuse en présence d'un système inducteur Redox et d'un agent émulsionnant, caraté-risé en ce que l'on utilise

| | |
|---|---|
| 0,1 à 1,5% | en poids d'agent émulsionnant anionique, |
| 0,1 à 1,0% | en poids de disulfite alcalin, de bisulfite alcalin ou d'anhydride sulfureux, et |
| 0,75 à 2,0% | en poids de peroxodisulfate, sel d'ammonium ou alcalin, |

toutes ces indications de pour cent se rapportant à la quantité des monomères totaux.

2. Procédé selon la revendication 1, caractérisé en ce qu'on copolymérise

| | |
|---|---|
| 80 à 92% | en poids d'acrylate de 2-éthylhexyle, |
| 5 à 15% | en poids d'acrylonitrile, et |
| 1 à 5% | en poids d'acide acrylique. |

3. Utilisation des dispersions d'acide polyacrylique selon la revendication 1 pour la préparation de masses adhésives.

4. Masses adhésives à base d'une dispersion aqueuse d'esters polyacryliques à une concentration de 20 à 65% en poids, préparées selon la revendication 1.